# EUROPÄISCHE PATENTSCHRIFT

(11) **EP 0 485 387 B1**
(45) Veröffentlichungstag und Bekanntmachung des Hinweises auf die Patenterteilung: **24.08.1994**
(21) Anmeldenummer: 90906900.7
(22) Anmeldetag: 16.05.1990
(51) Int. Cl.: H02K 1/18, H02K 1/16

(54) **WECHSELSTROMGENERATOR MIT STATORPAKET-MITTELLAMELLE UND VERFAHREN ZUR HERSTELLUNG DER MITTELLAMELLE**
ALTERNATING CURRENT GENERATOR WITH A CENTRAL LAMELLA IN THE STATOR BUNDLE AND PROCESS FOR MANUFACTURING THE CENTRAL LAMELLA
ALTERNATEUR AVEC LAME MEDIANE D'UN EMPILAGE DE STATOR ET PROCEDE POUR LA FABRICATION DE LA LAME MEDIANE

(30) Priorität: 01.08.1989 DE 3925365
(43) Veröffentlichungstag der Anmeldung: 20.05.1992
(73) Patentinhaber: ROBERT BOSCH GMBH, 70442 Stuttgart (DE)
(72) Erfinder: HAGENLOCHER, Walter, D-7000 Stuttgart 40 (DE); FRISTER, Manfred, D-7141 Schwieberdingen (DE)
(86) Internationale Anmeldenummer: DE9000360
(87) Internationale Veröffentlichungsnummer: WO9102398

(56) Entgegenhaltungen:
- DE-A- 2 033 060
- DE-A- 2 148 827
- FR-E- 78 350

## Beschreibung

### Stand der Technik

Die Erfindung geht aus von einem Wechselstromgenerator nach dem Oberbegriff des Anspruchs 1 bzw. einem Verfahren zur Herstellung der Mittellamelle des Statorpakets eines solchen Wechselstromgenerators nach dem Oberbegriff des Anspruchs 5 gemäß DE-A-2 148 827.

Bei Wechselstromgeneratoren und speziell bei Drehstromgeneratoren als Lichtmaschinen für Kraftfahrzeuge u. dgl. ist es bekannt (DE-OS 2 132 052), das Ständerblechpaket mit einem mittleren Ring größeren Durchmessers so auszubilden, daß dieser Ring einen äußeren Ringflansch zum Festklemmen des Ständerblechpakets zwischen den beiden Lagerschilden des Generators bildet. Dieser Ring ist dabei vorzugsweise selbst ein Teil des Ständerblechs, gebildet also aus einer oder mehreren Ständerblechlamellen, die mit ihrem größeren Außendurchmesser die äußere Ringform zur Zentrierung zwischen den beidseitigen Gehäuseanlageflächen bilden.

Dabei werden die Stator-Mittellamellen aus einem Stück hergestellt und befinden sich zwischen den beiden Pakethälften des restlichen Statorpakets, wobei ferner noch vorzugsweise gleichmäßig über den Umfang der Mittellamellen verteilt Augen in Form von Ansätzen, beispielsweise vier Augen vorgesehen sind, die als Auflageflächen für die Lagerschilde des Generators dienen. Das ganze Statorpaket kann dann zusammengenietet und/oder verschweißt werden.

Die über den Umfang angeordneten Augen der als Zentrierung für die beiden Lagerschilde des Generatorgehäuses dienenden Mittellamellen ermöglichen ein Verschrauben der drei Bauteile A-Lagerschild, B-Lagerschild und des Statorpakets, ohne daß die Anzugskräfte der durch die Augen geführten Schrauben eine Verformung des Stator-Innendurchmessers hervorrufen. Die beiden Lagerschilde nehmen ihrerseits die Lager für die Rotorwelle auf. Um einen möglichst geräuscharmen Generator zu erhalten, ist es neben Bemühungen in anderen Bereichen erforderlich, daß der Rotor genau zentrisch zum Stator gelagert ist. Eine wichtige Voraussetzung zur Erfüllung dieser Bedingung liegt darin, daß die Mittellamellen des Statorpakets zwischen den restlichen Pakethälften so ausgerichtet und plaziert sind, daß die Koaxialitätsabweichung zwischen dem Außendurchmesser der Mittellamellen und dem Innendurchmesser des Gesamtpakets so gering wie möglich gehalten wird. Die Mittellamellen sind deshalb stets so auszubilden, daß sich ihr Außendurchmesser genau konzentrisch zum Innendurchmesser der beiden restlichen Pakethälften ausrichten läßt.

Die notwendigen Freiheitsgrade hierfür erhält man bei den schon für eine solche Justierung notwendigerweise einstückigen Mittellamellen dadurch, daß deren Innendurchmesser geringfügig größer als der der beiden anschließenden Statorpakethälften ist, mit anderen Worten, der Innendurchmesser der Mittellamellen tritt geringfügig aus dem inneren, den Rotor aufnehmenden Kreis zurück. Ferner können die Nutflächen, also die zwischen den Stegen der Lamellen verbleibenden freien Flächen sowie die Nietlochdurchmesser der Mittellamellen größer ausgebildet werden, so daß sich entsprechende Verschiebemöglichkeiten ergeben, ohne daß es hierdurch zu einer Überdeckung der durch die beiden Pakethälften freien Bereiche des Statorpakets kommt.

Erkennbar müssen daher die Mittellamellen einteilig ausgebildet sein, können also nicht, wie bei den die Pakethälften bildenden Lamellen für sich gesehen aus der DE-A-20 33 060 bekannt, auch aus einzelnen Segmenten bestehen, die zu einem Paket vereinigt werden, und zwar des halb nicht, weil wegen des größeren Innendurchmessers der Mittellamellen diese Segmente sonst beim genauen Positionieren, bei welchem man sich nach dem Außendurchmesser richtet, nach innen ausweichen würden.

Einteilige Lamellen sind jedoch sehr stoffintensiv, benötigen also viel Ausgangsmaterial, da sie aus einer vollen Scheibe bei erheblichem Kostenaufwand gestanzt werden müssen.

Es ist daher auch schon an anderer Stelle bekannt geworden (DE-PS 2 015 502), ringförmige Lamellen für elektrodynamische Maschinen dadurch herzustellen, daß zunächst von einem ebenen Blech aus ferromagnetischem Werkstoff ausgegangen und aus diesem Blech ein Rohr gebildet wird. Dieses Rohr wird dann in entsprechende Rohrstücke geschnitten, so daß sich Zylinder vorgegebener Abmessungen und mit einer der Ausgangsblechstärke entsprechenden Dicke ergeben. Durch einen Stauch-Verformungsvorgang wird dann jedes Rohrstück zwischen seinen Stirnflächen nach außen ausgebaucht und anschließend durch eine in Achsrichtung ausgeübte Kraft zu einer doppelwandigen, ringförmigen Scheibe zusammengepreßt. Gleichzeitig werden bei diesem Zusammenpressen des ausgebauchten Rohrstücks die Innenund Außenränder der so geformten ringförmigen Lamellenkalibriert. Es ist dann noch möglich, die bei jedem Bearbeitungsvorgang an sich entstehenden zwei Lamellen durch Auftrennen des gestauchten Rohrstücks am Außenrand voneinander zu trennen. Die Nuten werden dann in die ringförmige Lamelle am Innenrand eingearbeitet. Hierdurch ist es zwar möglich, Lamellen aus einem Stück herzustellen, ohne daß bei einem sonst erforderlichen Stanzvorgang die gesamte Innenscheibe des Lamellenrings als Abfall wegfällt, man muß aber in Kauf nehmen, daß durch den Stauchvorgang Stirnflächenbereiche des Ausgangsrohrstücks auf einen geringeren Durchmesser und eine mittlere Materiallage auf einen größeren Durchmesser als der Ausgangsrohrdurchmesser gebracht werden müssen, so daß ein Fließen des Materials erforderlich ist oder unterschiedliche Materialdicken resultieren.

Der Erfindung liegt die Aufgabe zugrunde, Mittellamellen für das Statorpaket eines Wechselstromgenerators einerseits stoff- und damit kostensparend unter Vermeidung des Ausstanzens aus einer runden Vollscheibe herzustellen, andererseits aber sicherzustellen, daß für die Positionierung die erforderliche Einstükkigkeit der Mittellamelle gegeben ist.

### Vorteile der Erfindung

Die Erfindung löst diese Aufgabe mit den kennzeichnenden Merkmalen des Anspruchs 1 bzw. des Anspruchs 5 und hat den entscheidenden Vorteil, daß es möglich ist, auch für die Mittellamellen einzelne Segmente stoffsparend aus einem Blechstreifen zu stanzen und anschließend die Segmente mit Hilfe entsprechend gestalteter Fügeelemente durch Ineinanderpressen zu einer einteiligen Lamelle zusammenzufügen.

Die Erfindung verbindet daher die Vorteile einer einteiligen Lamelle bezüglich der Handhabung bei der Montage mit den stoff- und kostensparenden Vorteilen einer aus Segmenten bestehenden Lamelle, die jeweils aus einzelnen Blechstreifen gestanzt ist.

Durch die in den Unteransprüchen aufgeführten Maßnahmen sind vorteilhafte Weiterbildungen und Verbesserungen der durch die Erfindung ermöglichten Ausbildung und Herstellung von Stator-Mittellamellen bei Wechselstromgeneratoren möglich. Besonders vorteilhaft ist die Herstellung einer Mittellamelle aus mehreren, beispielsweise zwei, drei oder vier Segmenten, wobei die Aufteilung so vorzunehmen ist, daß möglichst gleiche Segmente entstehen.

Die Verbindung der einzelnen Segmente zu einer einteiligen Vollamelle erfolgt dann durch formschlüssige Verbindungsmittel jeweils an den einzelnen Segmentenden. Beispielsweise kann ein kreisförmiger Ansatz am Stirnende eines Segments in eine entsprechende Aussparung am benachbarten Stirnende des anderen Segments eingepreßt und so beide Segmente zu einer Einheit verbunden werden. Hierdurch ergibt sich eine Art Verknöpfung, die bei entsprechender Dimensionierung eine vollkommen unverrutschbare und steife Verbindung der einzelnen Segmente sicherstellt, so daß dann auch die justierende Positionierung der Mittellamelle bei der Montage sicher beherrschbar ist.

### Zeichnung

Ein Ausführungsbeispiel der Erfindung ist in der Zeichnung dargestellt und wird in der nachfolgenden Beschreibung näher erläutert. Es zeigen:
- Fig. 1: im Längsschnitt die wesentlichen Teilbereiche eines Drehstromgenerators als Lichtmaschine für Kraftfahrzeuge u. dgl. als bevorzugtes Ausführungsbeispiel für den Einsatz vorliegender Erfindung;
- Fig. 2: in Draufsicht ein Lamellensegment für eine Mittellamelle nach vorliegender Erfindung in Form eines Halbkreisrings;
- Fig. 3: einen Lamellensegment-Endbereich mit Aussparung zur Aufnahme des in
- Fig. 4: gezeigten angrenzenden Lamellenendbereichs mit vorspringendem, kreisförmigem Ansatz und
- Fig. 5: eine mögliche Ausführungsform einer durch entsprechend gestaltete Fügeelemente zusammengepreßten, aus zwei Einzelsegmenten bestehenden Mittellamelle eines Statorpakets.

### Beschreibung der Ausführungsbeispiele

Der Grundgedanke vorliegender Erfindung besteht darin, die Mittellamellen eines Statorpakets durch einfaches Ausstanzen von Teilsegmenten aus ebenen Blechstreifen und anschließendes formschlüssiges Verbinden dieser Segmente zur einstückigen starren Vollamelle herzustellen.

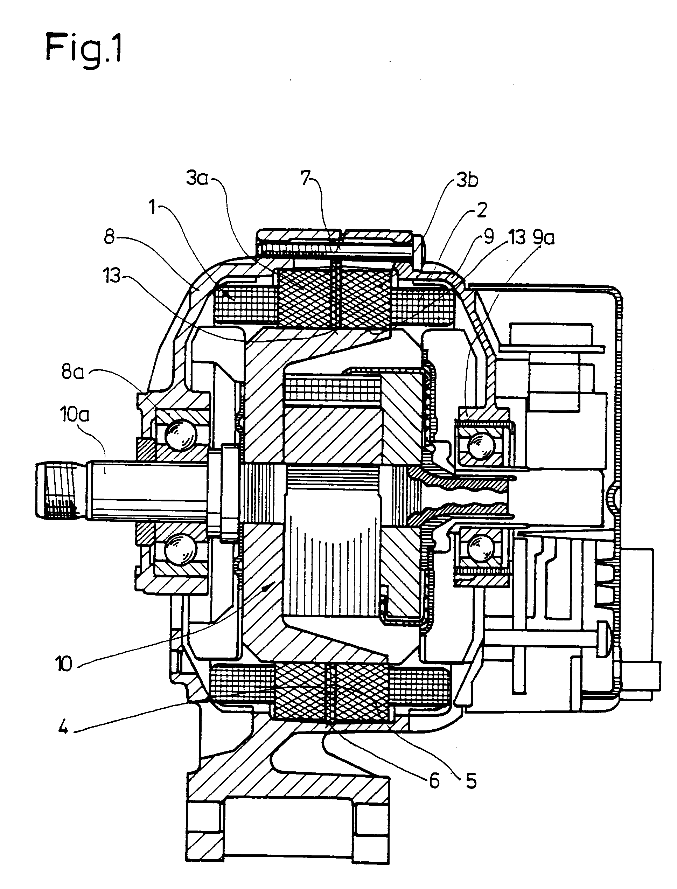

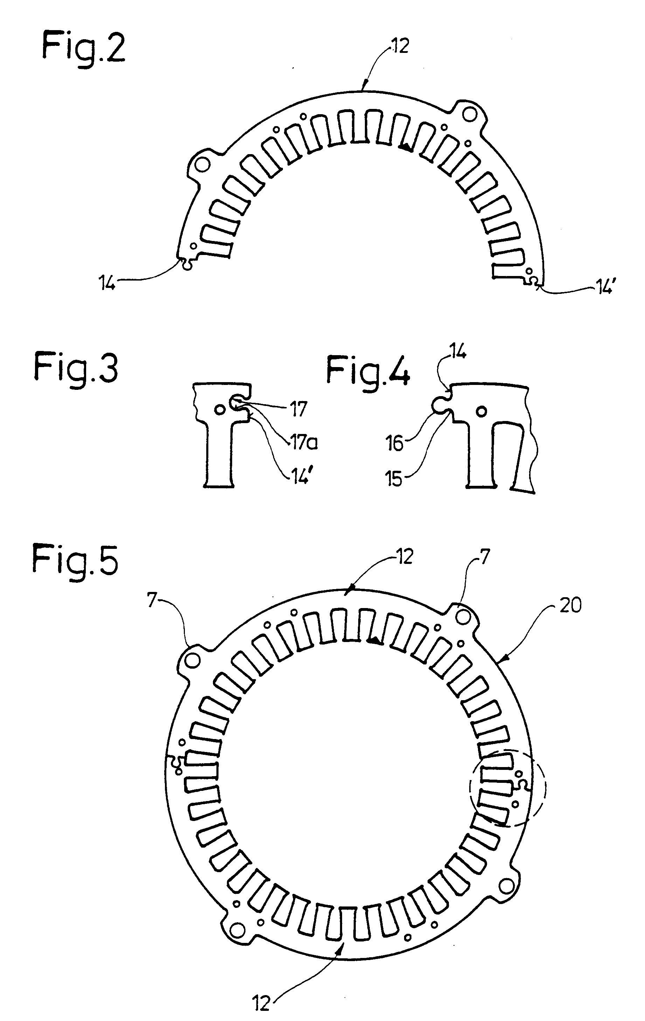

In Fig. 1, die hauptsächlich auch dem besseren Verständnis der weiter vorn schon angegebenen Erläuterungen zum Stand der Technik dient und die Anordnung der Mittellamellen bei einem Drehstromgenerator als Lichtmaschine für Kraftfahrzeuge u. dgl. zeigt, ist der Stator 1 am inneren Umfang der beiden, das Gehäuse des Drehstromgenerators bildenden Lagerschilden, nämlich des A-Lagerschilds 8 und des B-Lagerschilds 9 angeordnet und zentriert, wobei die beiden Lagerschilde jeweils die beidseitigen Lager 8a und 9a für die Rotorwelle 10a des Rotors 10 in Einpässen aufnehmen. Der Stator 1 umfaßt neben der Wicklung 2 zwei Pakethälften 3a und 3b, die zwischen sich die sogenannten Mittellamellen aufnehmen, die hier mit 4 und 5 bezeichnet sind. Die Mittellamellen 4 und 5 sind an ihrem Außendurchmesser 6 größer als die beiden Pakethälften 3a und 3b und verfügen ferner an ihrem Umfang über eine vorgegebene Anzahl, beispielsweise vier Augen 7 (s. auch Fig. 5).

Wie eingangs schon erwähnt ist der Innendurchmesser 13 der Mittellamellen größer als der Innendurchmesser 13′ der beiden Pakethälften 3a und 3b, so daß sich deren Außendurchmesser 6 bei der Montage sehr genau konzentrisch zum Innendurchmesser 13′ der Pakethälften ausrichten läßt, vorausgesetzt, daß die Mittellamellen 4 und 5 als Einheit reagieren.

Fig. 2 zeigt ein stoffsparend aus einem ebenen Blechstreifen gestanztes Teilsegment 12, wobei die Anzahl der Segmente, die sich schließlich zu einer vollständigen Mittellamelle ergänzen, nicht kritisch ist, so daß man eine Mittellamelle auch aus mehreren, beispielsweise zwei, drei, vier, fünf oder noch mehr Segmenten herstellen kann. Hierdurch ist es auch möglich, die einzelnen Segmente in entsprechend günstiger Weise auf den zur Verfügung stehenden Blechstreifen anzuordnen, so daß möglichst wenig Abfall entsteht.

Zur formschlüssigen Verbindung der Teilsegmente 12 miteinander, so daß sich der Vollkreis jeder Mittellamelle bilden kann, verfügen die Segmente an ihren stirnseitigen Endbereichen 14 bzw. 14′ über formschlüssige Verbindungsmittel, die entsprechend einem bevorzugten Ausführungsbeispiel einen gegenseitigen Verriegelungscharakter haben und daher die einzelnen Segmente nicht nur kraftschlüssig, sondern auch formschlüssig zur vollen Mittellamelle verbinden.

Bei dem dargestellten Ausführungsbeispiel ist an dem einen Stirnende 14 des Lamellensegments 12 ein Ansatz gebildet, der von einem verjüngten Halsteil 15 übergeht in einen kreisförmigen Kopfteil 16, wobei dann entsprechend komplementär das andere Stirnende 14′ bei dem dargestellten Ausführungsbeispiel der gleichen Lamelle 12, eine entsprechende Aussparung 17 aufweist, die gebildet ist von einer Teilkreisform 17a, die im Übergang nach außen offen ist durch beidseitige eingrenzende Vorsprünge. Es ist daher möglich, zuerst durch Übereinanderlegen des Kopfteils 16 und der Öffnung 17a und anschließend Ineinanderpressen aneinandergrenzende Stirnenden von Lamellensegmenten miteinander und jeweils sämtliche vorhandenen Segmente durchlaufend zu der Einheit der vollständigen Mittellamelle zu verbinden. Dabei stützen sich die beiden Stirnendflächen 14 und 14′ aneinandergrenzender Lamellensegmente gegeneinander ab, so daß durch das Einpressen der kreisförmigen Ansätze in die entsprechenden Aussparungen die Segmente starr und unverrückbar miteinander zu einer Einheit verbunden werden, vorzugsweise nach Art der in den Figuren 3 und 4 gezeigten "Verknöpfung". Es ist natürlich möglich, auch noch andere, formschlüssig wirkende Verbindungsmittel für die einzelnen Lamellensegmente vorzusehen.

Es ist auch möglich, an jeweils einem Lamellensegment nur vorspringende Ansätze und am anderen nur Aussparungen anzuordnen - bevorzugt wird aber die in den Figuren 2, 3 und 4 gezeigte Realisierungsform von Lamellensegmenten, da man auf diese Weise nur einen Segmenttyp herzustellen braucht.

Auf jeden Fall ergänzen sich die jeweils vorgesehenen Lamellensegmente vorgegebener Anzahl zu einer einstückigen und vollständigen Mittellamelle 20, wie in Fig. 5 gezeigt.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Wechselstromgenerator, insbesondere Drehstromgenerator als Lichtmaschine für mobile Einheiten, Kraftfahrzeuge, Bahnen und dgl. mit einem Statorpaket (3a, 12, 3b) und einem in diesem rotierenden Läufer (10), wobei eine Statorpaket-Mittellamelle (20) mit ihrem Außendurchmesser (6) zumindest im Bereich (7) von Befestigungsmitteln über den Außendurchmesser des Statorpaketes (3a, 3b) hinausragt und an diesen Bereichen von das Gehäuse bildenden Lagerschilden (8, 9) durch die Befestigungsmittel eingespannt ist, dadurch gekennzeichnet, daß die Mittellamelle ( 20) aus einzelnen segmentartigen Teilen (12) besteht, die durch ineinandergreifende Verrastungsmittel (16, 17) miteinander verbunden sind.

2. Wechselstromgenerator nach Anspruch 1, dadurch gekennzeichnet, daß jede Mittellamelle aus einer Vielzahl von einzelnen Lamellensegmenten (12) zusammengesetzt ist, die an ihren aneinandergrenzenden Stirnflächen (14) die Verrastungsmittel (16, 17) aufweisen, mit welchen sie formschlüssig ineinandergreifen.

3. Wechselstromgenerator nach Anspruch 1 oder 2, dadurch gekennzeichnet, daß die Verrastungsmittel jeweils aus einem kreisförmigen, an je einer der beiden Stirnendflächen (14) jedes Segments vorspringenden Kopfteil (16) und aus einer entsprechend komplementären Aussparung (17) am anderen Stirnendteil des angrenzenden Lamllensegments bestehen, wobei der Kopfteil in die Aussparung eingepreßt wird und die spaltfrei einander gegenüberliegenden Stirnendflächen (14, 14′) die einzelnen Lamellensegmente im Übergang steif gegeneinander abstützen.

4. Wechselstromgenerator nach einem der Ansprüche 1 bis 3, dadurch gekennzeichnet, daß jedes Lamellensegment an seinen beiden Stirnendflächen (14, 14′) jeweils die zueinander komplementären Verrastungsmittel (16, 17) aufweist.

5. Verfahren zur Herstellung der Mittellamelle (20) des Statorpakets (3a, 12, 3b) eines Wechselstromgenerators, insbesondere Drehstromgenerator als Lichtmaschine für mobile Einheiten, Kraftfahrzeuge, Bahnen und dgl., wobei das Statorpaket (3a, 12, 3b) mit dem Außendurchmesser (6) seiner Mittellamelle (20) von beidseitigen, das Gehäuse des Wechselstromgenerators bildenden Lagerschilden (8, 9) an mindestens im Bereich (7) von Befestigungsmitteln über den Außendurchmesser der beidseitigen Statorpakethälften (3a, 3b) hinausragt und an diesen Bereichen durch die Befestigungsmittel eingespannt wird, dadurch gekennzeichnet, daß einzelne teilkreisförmige Lamellensegmente (12) aus einem Blechstreifen gestanzt und zur Bildung der einstückigen Mittellamelle mit ihren jeweiligen Stirnendflächen (14) aneinandergelegt und durch ineinandergreifende Verrastungsmittel (16, 17) an den Lamellensegmenten (12) formschlüssig miteinander verbunden werden.

6. Verfahren nach Anspruch 5, dadurch gekennzeichent, daß die einzelnen Lamellensegmente (12) auf dem einen Blechstreifen stoffsparend angeordnet ausgestanzt werden und zur formschlüssigen Verbindung eine gegenseitige Verrastung ermöglichende Fügeteile (16, 17) an den Stirnendflächen der Lamellensegmente (12) in komplementärer Form ausgebildet und ineinandergepreßt werden.

7. Verfahren nach Anspruch 5 oder 6, dadurch gekennzeichnet, daß die miteinander verrastenden Fügeteile (16, 17) als Aussparungen und im angrenzenden Stirnendflächenbereich als hintergreifende Vorsprünge ausgestanzt werden, die aneinandergrenzende Lamellensegmente (12) in Umfangsrichtung miteinander verspannen, wobei sich die aneinandergrenzenden Stirnendflächen (14) aneinanderlegen und gegeneinander abstützen.

## Claims

1. Alternator, especially a three-phase alternator as a generator for mobile units, motor vehicles, railways and the like, having a stator core (3a, 12, 3b) and a rotor (10) which rotates therein, the external diameter (6) of a stator core centre laminate (20) projecting beyond the external diameter of the stator core (3a, 3b) at least in the region (7) of attachment means, and being clamped in by the attachment means on these regions of bearing plates (8, 9) which form the housing, characterized in that the centre laminate (20) consists of individual segment-like parts (12) which are connected to one another by latching means (16, 17) which engage in one another.

2. Alternator according to Claim 1, characterized in that each centre laminate is composed of a multiplicity of individual laminate segments (12) which have the latching means (16, 17), by means of which they engage in one another in a positively locking manner, on their mutually adjacent end surfaces (14).

3. Alternator according to Claim 1 or 2, characterized in that the latching means in each case consist of a circular head part (16), which projects on in each case one of the two end surfaces (14) of each segment, and of a correspondingly complementary recess (17) on the other end part of the adjacent laminate segment, the head part being pressed into the recess, and the end surfaces (14, 14′), which are opposite one another without any gap, supporting the individual laminate segments in the junction such that they are stiff with respect to one another.

4. Alternator according to one of Claims 1 to 3, characterized in that each laminate segment in each case has the mutually complementary latching means (16, 17) on its two end surfaces (14, 14′).

5. Method for producing the centre laminate (20) of the stator core (3a, 12, 3b) of an alternator, especially a three-phase alternator as a generator for mobile units, motor vehicles, railways and the like, the external diameter (6) of the centre laminate (20) of the stator core (3a, 12, 3b) projecting from bearing plates (8, 9), which are on both sides and form the housing of the alternator, beyond the external diameter of the stator core halves (3a, 3b) on both sides, at least in the region (7) of attachment means, and being clamped in on these regions by the attachment means, characterized in that individual partial-circular laminate segments (12) are stamped out of a sheet-metal strip, their respective end surfaces (14) are placed against one another in order to form the integral centre laminate, and are connected to one another in a positively-locking manner on the laminate segments (12), by latching means (16, 17) which engage in one another.

6. Method according to Claim 5, characterized in that the individual laminate segments (12) are stamped out, arranged in a manner which saves material, on one sheet-metal **s**trip and, in order to produce a **p**ositively**-** locking connection, joint parts (16, 17), which make possible latching to one another, are constructed in a complementary form and are pressed into one another on the end surfaces of the laminate segments (12).

7. Method according to Claim 5 or 6, characterized in that the joint parts (16, 17) which latch to one another are stamped out as recesses and, in the adjacent end surface region, as projections which engage behind and clamp the mutually adjacent laminate segments (12) to one another in the circumferential direction, the mutually adjacent end surfaces (14) resting against one another and being supported against one another.

## Revendications

1. Alternateur, en particulier alternateur triphasé servant de génératrice pour unités mobiles, véhicules à moteur, chemins de fer, et analogues avec un paquet de stator (3a, 12, 3b) et un induit (10) tournant dans celui-ci, une lamelle médiane (20) de paquet de stator faisant saillie par son diamètre extérieur (6) au moins dans la zone (7) de moyens de fixation sur le diamètre extérieur du paquet de stator (3a, 3b) et étant serrée sur ces zones par les flasques (8, 9) constituant le carter à travers les moyens de fixation, alternateur caractérisé en ce que la lamelle médiane (20) se compose de différentes parties de segments, qui sont reliées les unes aux autres par des moyens d'encliquetage venant en prise les uns dans les autres (16, 17).

2. Alternateur selon la revendication 1, caractérisé en ce que chaque lamelle médiane est composée d'une multiplicité de segments individuels de lamelles (12) qui présentent sur leurs faces frontales adjacentes les unes aux autres (14) les moyens d'encliquetage (16, 17), par lesquels ils viennent en prise les uns dans les autres par engagement positif.

3. Alternateur selon la revendication 1 ou 2, caractérisé en ce que les moyens d'encliquetage consistent respectivement en une tête (16) de forme circulaire, faisant saillie sur chacune des deux faces frontales terminales (14) de chaque segment et en un évidement (17) complémentaire correspondant sur l'autre partie frontale terminale du segment de lamelle adjacent, la tête étant enfoncée dans l'évidement et les faces frontales (14, 14′), qui se trouvent en regard l'une de l'autre sans jeu, appuyant les différents segments de lamelle de façon rigide les uns contre les autres au passage.

4. Alternateur selon l'une des revendications 1 à 3, caractérisé en ce que chaque segment de lamelle présente sur ses deux faces frontales terminales (14, 14′) respectivement les moyens d'encliquetage mutuellement complémentaires (16, 17).

5. Procédé de fabrication des lamelles médianes (20) du paquet de stator (3a, 12, 3b) d'un alternateur, en particulier d'un alternateur triphasé servant de génératrice pour des unités mobiles, des véhicules à moteur, des chemins de fer et analogues, dans lequel le paquet de stator (3a, 12, 3b) fait saillie par le diamètre extérieur (6) de sa lamelle médiane (20) des deux côtés des flasques (8, 9), constituant le carter de l'alternateur, sur au moins le diamètre extérieur des moitiés des paquets de stator des deux côtés dans la zone (7) des moyens de fixation et est serré dans ces zones par les moyens de fixation, procédé caractérisé en ce que différents segments de lamelle de forme partiellement circulaire sont estampés à partir d'une bande de tôle et sont mis côte à côte par leurs faces frontales terminales (14) pour former la lamelle médiane d'une seule pièce et sont reliés les uns aux autres, par des moyens d'encliquetage (16, 17) venant en prise les uns dans les autres, par engagement positif sur les segments de lamelle (12).

6. Procédé selon la revendication 3, caractérisé en ce que les différents segments de lamelle (12) sont estampés en économisant la matière sur l'une des bandes de tôle et sont formées pour la jonction à engagement positif des pièces d'assemblage (16, 17) permettant un encliquetage réciproque avec une forme complémentaire sur les faces frontales terminales des segments de lamelle (12) et elles sont enfoncées l'une dans l'autre.

7. Dispositif selon la revendication 5 ou 6, caractérisé en ce que les pièces de jonction (16, 17) s'encliquetant l'une dans l'autre sont estampées comme des évidements et des saillies venant en prise par derrière dans la zone adjacente des faces frontales terminales, pièces qui serrent les uns avec les autres les segments de lamelle adjacents les uns aux autres (12) dans le sens périphérique, les faces frontales terminales (14) étant mises de façon adjacentes les unes aux autres et appuyées les unes contre les autres.
